# FASCICULE DE BREVET EUROPEEN

(11) **EP 1 975 048 B1**
(45) Date de publication et mention de la délivrance du brevet: **19.06.2013**
(21) Numéro de dépôt: 08102888.8
(22) Date de dépôt: 25.03.2008
(51) Int. Cl.: B62D 65/14, B62D 25/14

(54) **Système d'accrochage d'une planche de bord sur un châssis de véhicule automobile**
Einrastsystem eines Armaturenbretts an das Fahrgestell eines Kraftfahrzeugs
System for attaching a dashboard to the chassis of an automobile

(30) Priorité: 26.03.2007 FR 0754025
(43) Date de publication de la demande: 01.10.2008
(73) Titulaire: Attax, 78420 Carrières sur Seine (FR)
(72) Inventeur: Dubost, Dominique, 78170, LA CELLE SAINT CLOUD (FR)
(74) Mandataire: Domenego, Bertrand

(56) Documents cités:
- EP-A- 1 586 497
- FR-A- 2 786 445
- JP-A- 2002 019 496
- JP-A- 2005 186 634
- US-A- 5 881 798

## Description

La présente invention concerne un système d'accrochage d'une planche de bord sur un châssis de véhicule automobile.

Une planche de bord de véhicule automobile comporte généralement une poutre de support dont les extrémités et la partie intermédiaire comportent des moyens d'accrochage sur des zones correspondantes du châssis du véhicule.

Actuellement, les moyens d'accrochage utilisés sont constitués par des mécanismes à vis adaptés pour coopérer avec des écrous du châssis.

On conçoit cependant que l'utilisation de ces vis présente un certain nombre d'inconvénients notamment au niveau des difficultés d'accès à celles-ci.

En effet, pour assurer la fixation de la planche de bord sur le châssis du véhicule, les opérateurs de montage doivent avoir accès à ces vis de sorte que certains éléments de la planche de bord doivent par exemple être démontés puis remontés une fois la planche fixée sur le châssis.

Par ailleurs, de tels systèmes à vis peuvent également présenter un certain nombre d'inconvénients notamment au niveau des rattrapages de jeux de montage éventuels.

Le but de l'invention est donc de résoudre ces problèmes.

A cet effet, l'invention a pour objet un système d'accrochage d'une planche de bord sur un châssis de véhicule automobile, caractérisé en ce que l'une des pièces, planche de bord ou châssis, comporte des moyens en forme de crochet adaptés pour s'engager dans une lumière de l'autre pièce, châssis ou planche de bord, et pour coopérer avec des moyens formant verrou d'accrochage, déplaçables entre une position escamotée de montage/démontage des deux pièces et une position active d'accrochage des deux pièces sous la commande de moyens d'actionnement.

Suivant des modes particuliers de réalisation, le système comporte l'une ou plusieurs des caractéristiques suivantes, prise(s) isolément ou selon toutes les combinaisons techniquement possibles :
- les moyens formant verrou sont portés par une platine articulée sur la pièce correspondante et reliée aux moyens d'actionnement par une première bielle dont une première extrémité est associée aux moyens d'actionnement et dont une seconde extrémité est articulée sur la platine pour déplacer celle-ci entre des positions escamotée et active ;
- les moyens formant verrou comportent un loquet de verrouillage déplaçable à coulissement dans une glissière de la platine à l'encontre de la sollicitation de moyens élastiques sous l'action d'une deuxième bielle de manoeuvre articulée sur la pièce correspondante et sur la première bielle, lors du déplacement des moyens formant verrou entre leur position escamotée et leur position active, pour franchir les moyens en forme de crochet et s'engager sous ceux-ci en position d'accrochage des deux pièces l'une sur l'autre ;
- des moyens de mise sous tension sont prévus entre les deux pièces;
- les moyens de mise sous tension comprennent au moins une rondelle de tension placée autour des moyens en forme de crochet ;
- les moyens d'actionnement comportent un vérin pneumatique.

L'invention sera mieux comprise à l'aide de la description qui va suivre, donnée uniquement à titre d'exemple et faite en se référant aux dessins annexés, sur lesquels :
- la figure 1 représente une vue de côté d'un système d'accrochage selon l'invention ;
- la figure 2 représente une vue en perspective avec des portions arrachées de ce système ;
- la figure 3 représente une vue en perspective de détails de moyens formant verrou entrant dans la constitution d'un tel système ; et
- les figures 4, 5, 6 et 7 représentent des vues de détails illustrant le déplacement des moyens formant verrou de leur position escamotée de montage/démontage des deux pièces vers leur position active d'accrochage de celles-ci.

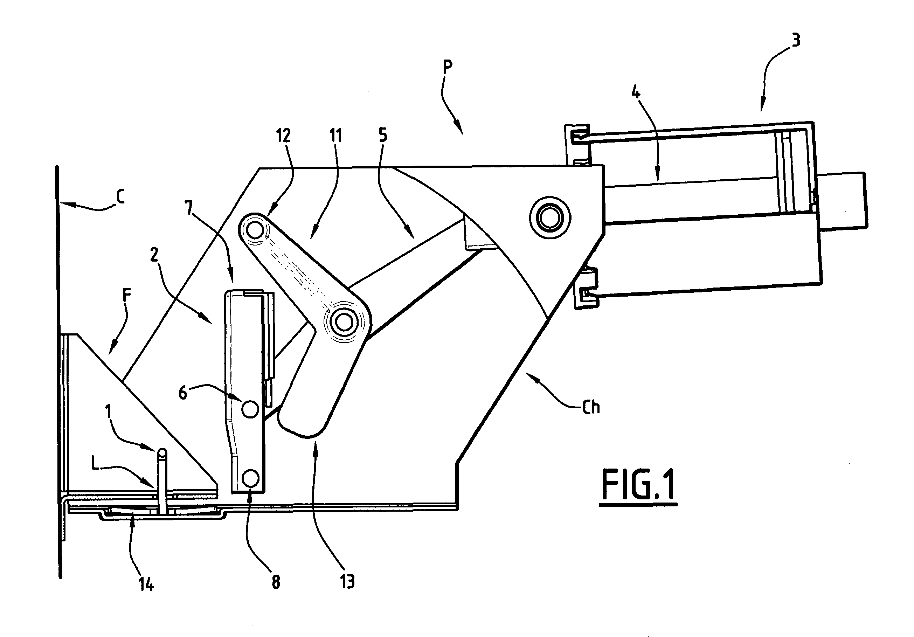

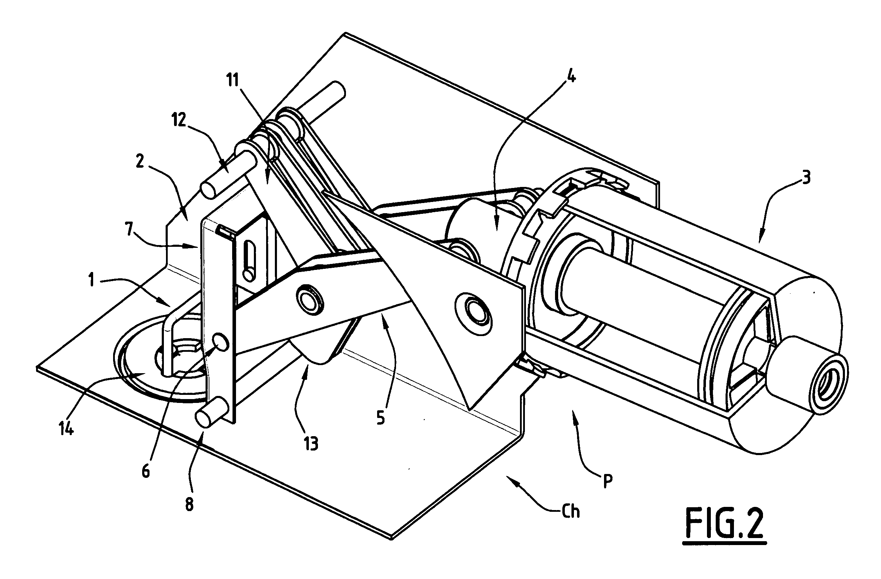

On a en effet illustré sur ces figures et en particulier sur les figures 1 et 2, un système d'accrochage de deux pièces l'une sur l'autre dont l'une est par exemple formée par une poutre P de planche de bord de véhicule automobile et l'autre est par exemple formée par une pièce correspondante telle qu'une ferrure F du châssis C de ce véhicule.

L'une de ces pièces comme par exemple la poutre comporte une châpe Ch munie des moyens en forme de crochet désignés par la référence générale 1 sur cette figure.

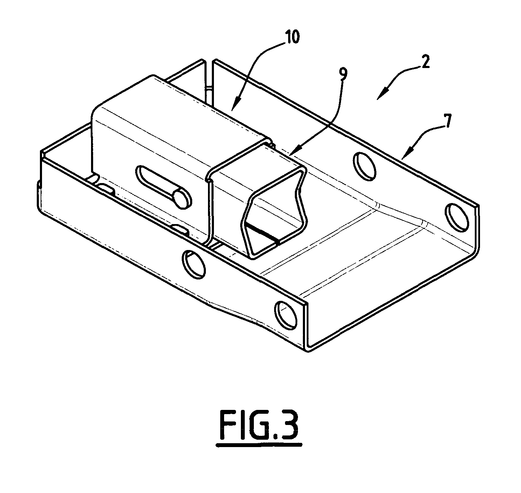

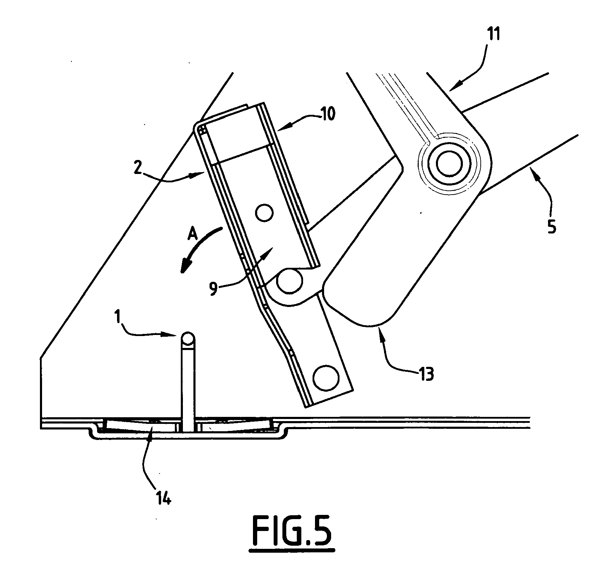

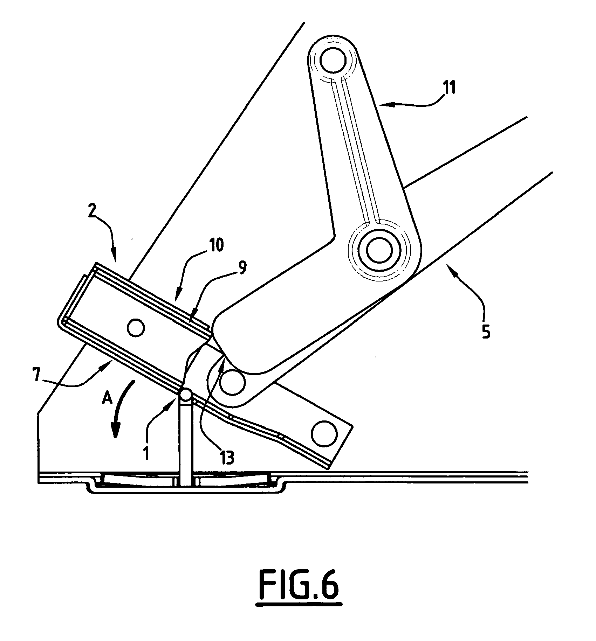

Ces moyens en forme de crochet présentent par exemple la forme générale d'un U dont les extrémités sont fixées sur la pièce correspondante. Ces moyens en forme de crochet sont adaptés pour s'engager dans une lumière L de l'autre pièce et plus particulièrement par exemple de la ferrure F de celle-ci et pour coopérer avec des moyens formant verrou, désignés par la référence générale 2 sur ces figures, déplaçables entre une position escamotée de montage/démontage des deux pièces, comme cela est illustré sur les figures 1 et 2, et une position active d'accrochage des deux pièces l'une sur l'autre sous la commande de moyens d'actionnement, comme cela est illustré sur les figures 3 à 7.

En fait et comme cela est illustré sur ces figures 1 et 2, ces moyens d'actionnement sont désignés par la référence générale 3 et comprennent par exemple tout organe de motorisation tel que par exemple un vérin pneumatique dont l'alimentation est commandée pour assurer le déplacement des moyens formant verrou vers leur position active.

Bien entendu, d'autres modes de réalisation de ces moyens d'actionnement peuvent être envisagés.

En fait et comme cela est illustré, ces moyens d'actionnement présentent une tige de sortie, désignée par la référence générale 4, reliée de façon articulée par exemple à une première bielle de manoeuvre désignée par la référence générale 5 dont l'autre extrémité est articulée en 6 sur une platine 7 de support des moyens formant verrou.

Cette platine est elle-même articulée à une extrémité sur la pièce correspondante, par exemple la châpe Ch, par l'intermédiaire d'une tige d'articulation désignée par la référence générale 8 sur cette figure.

En fait, cette platine de support des moyens formant verrou porte, comme cela est illustré sur la figure 3, un loquet de verrouillage désigné par la référence générale 9, monté déplaçable à coulissement dans une glissière, désignée par la référence générale 10, fixée sur cette platine.

Des moyens de sollicitation élastique sont prévus entre le fond de cette glissière 10 et l'extrémité correspondante du loquet 9 pour solliciter celui-ci en position sortie comme cela est illustré sur cette figure 3.

Le fonctionnement de ce loquet sera décrit plus en détails par la suite.

On notera simplement que l'extrémité libre de celui-ci présente une forme générale en V.

Si l'on se reporte à nouveau aux figures 1 et 2, on peut constater que la première bielle 5 est également articulée au niveau de sa portion intermédiaire, sur une portion intermédiaire d'une seconde bielle, désignée par la référence générale 11, dont une première extrémité est articulée sur la pièce correspondante et plus particulièrement la châpe Ch, par exemple par l'intermédiaire d'une tige d'articulation désignée par la référence générale 12 sur ces figures.

La seconde extrémité de cette seconde bielle 11, désignée par la référence générale 13, constitue comme cela sera décrit plus en détails par la suite, des moyens de déplacement et d'escamotage du loquet 9 lors du déplacement des moyens formant verrou vers leur position active de verrouillage.

Des moyens de mise sous tension sont également prévus entre les deux pièces.

Dans l'exemple de réalisation illustré, ces moyens de mise sous tension sont formés par au moins une rondelle désignée par la référence générale 14, disposée autour des moyens en forme de crochet.

On conçoit donc que dans l'application spécifique envisagée, par exemple la fixation d'une planche de bord sur un châssis de véhicule automobile, chaque emplacement correspondant de la poutre de support de cette planche de bord, c'est-à-dire ses extrémités et sa partie intermédiaire, peut être muni d'un système d'accrochage de ce type, les lumières étant alors associées aux ferrures des portions de châssis correspondantes du véhicule.

La planche de bord est alors engagée en position dans le châssis. Les moyens en forme de crochet sont ensuite engagés dans les lumières correspondantes et l'opérateur de montage peut alors déclencher l'alimentation des moyens d'actionnement c'est-à-dire des vérins pneumatiques correspondants.

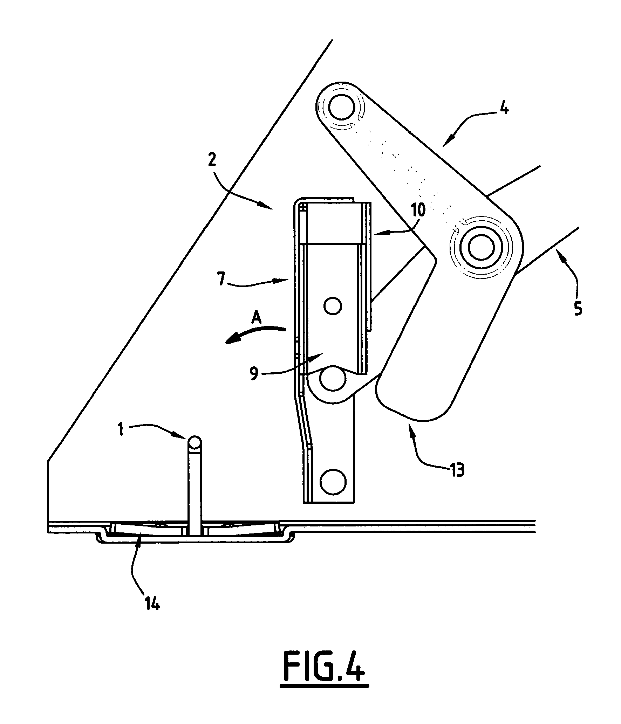

Comme cela est illustré sur les figures 4 à 7, la tige 4 de sortie du vérin de chaque système commence alors à sortir en poussant la première bielle 5 de manière à amener la platine 6 à pivoter autour de l'axe de sa tige d'articulation 8 dans le sens indiqué par la flèche A sur ces figures 4 à 7.

Dans le même temps et du fait de la disposition particulière des articulations entre les première et deuxième bielles entre elles et par rapport à la châpe Ch, l'extrémité 13 de la seconde bielle 11 vient repousser le loquet 9 dans la glissière 10 de la platine 7 pour lui permettre de franchir l'extrémité des moyens en forme de crochet 1.

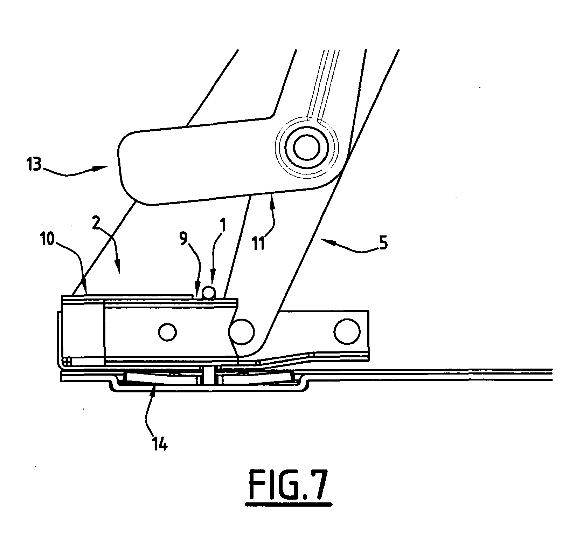

Ceci permet alors comme cela est illustré sur la figure 7, à ce loquet 9 de passer sous les moyens en forme de crochet puis d'être libéré de l'extrémité 13 de la deuxième bielle 11 pour assurer l'accrochage des deux pièces l'une sur l'autre en s'engageant sous ces moyens en forme de crochet et en assurant la mise sous contrainte de la rondelle 14.

Ceci permet alors de récupérer tous les jeux de montage entre les deux pièces.

L'alimentation des moyens d'actionnement peut alors être coupée.

On conçoit ainsi qu'un tel système présente un certain nombre d'avantages, notamment dans l'application spécifique envisagée à la fixation d'une planche de bord sur un châssis de véhicule automobile car il n'est alors plus nécessaire que l'opérateur de montage ait accès aux moyens de fixation comme c'était le cas par exemple avec les vis de montage.

Il va de soi bien entendu que d'autres modes de réalisation encore peuvent être envisagés.

## Revendications

1. Système d'accrochage d'une planche de bord (P) sur un châssis (C) de véhicule automobile, **caractérisé en ce que** l'une des pièces, planche de bord ou châssis, comporte des moyens en forme de crochet (1) adaptés pour s'engager dans une lumière (L) de l'autre pièce, châssis ou planche de bord, et pour coopérer avec des moyens formant verrou d'accrochage (2), déplaçables entre une position escamotée de montage/démontage des deux pièces et une position active d'accrochage des deux pièces sous la commande de moyens d'actionnement (3).

2. Système d'accrochage selon la revendication 1, **caractérisé en ce que** les moyens formant verrou (2) sont portés par une platine (7) articulée sur la pièce correspondante et reliée aux moyens d'actionnement (3) par une première bielle (5) dont une première extrémité est associée aux moyens d'actionnement (3) et dont une seconde extrémité est articulée sur la platine (7) pour déplacer celle-ci entre des positions escamotée et active.

3. Système d'accrochage selon la revendication 1 ou 2, **caractérisé en ce que** les moyens formant verrou (2) comportent un loquet de verrouillage (9) déplaçable à coulissement dans une glissière (10) de la platine (7) à l'encontre de la sollicitation de moyens élastiques sous l'action d'une deuxième bielle de manoeuvre (11) articulée sur la pièce correspondante et sur la première bielle, lors du déplacement des moyens formant verrou (2) entre leur position escamotée et leur position active, pour franchir les moyens en forme de crochet (1) et s'engager sous ceux-ci en position d'accrochage des deux pièces l'une sur l'autre.

4. Système d'accrochage selon l'une quelconque des revendications précédentes, **caractérisé en ce que** des moyens (14) de mise sous tension sont prévus entre les deux pièces.

5. Système d'accrochage selon la revendication 4, **caractérisé en ce que** les moyens de mise sous tension comprennent au moins une rondelle de tension (14) placée autour des moyens en forme de crochet (1).

6. Système d'accrochage selon l'une quelconque des revendications précédentes, **caractérisé en ce que** les moyens d'actionnement (3) comportent un vérin pneumatique.

## Patentansprüche

1. System zur Verriegelung einer Instrumententafel (P) auf einem Fahrgestell (C) eines Kraftfahrzeugs, **dadurch gekennzeichnet, dass** eines der Teile, die Instrumententafel oder das Fahrgestell, Mittel in Form eines Hakens (1) umfasst, die ausgelegt sind, um in eine Öffnung (L) des anderen Teils, dem Fahrgestell oder der Instrumententafel, einzugreifen, und um mit Mitteln zusammenzuarbeiten, die eine Verriegelungsraste (2) bilden, die zwischen einer eingefahrenen Position der Montage/Demontage der zwei Teile und einer aktiven Position der Verriegelung der zwei Teile, gesteuert von Betätigungsmitteln (3) verschiebbar sind.

2. Verriegelungssystem nach Anspruch 1, **dadurch gekennzeichnet, dass** die Mittel, die einen Riegel (2) bilden, von einer Platte (7) getragen werden, die auf dem entsprechenden Teil gelenkig verbunden ist und mit den Betätigungsmitteln (3) durch eine erste Stange (5) verbunden ist, von der ein erstes Ende mit den Betätigungsmitteln (3) assoziiert ist, und von der ein zweites ende auf der Platte (7) gelenkig verbunden ist, um diese zwischen der eingefahrenen und der aktiven Position zu verschieben.

3. Verriegelungssystem nach Anspruch 1 oder 2, **dadurch gekennzeichnet, dass** die Mittel, die einen Riegel (2) bilden, einen Schnappverschluss (9) umfassen, der in einer Gleitschiene (10) der Platte (7) gegen die Vorspannung von elastischen Mitteln unter der Einwirkung einer zweiten Treibstange (11), die auf dem entsprechenden Teil und auf der ersten Stange gelenkig verbunden ist, bei der Bewegung der Mittel, die eine Raste (2) bilden, zwischen ihrer eingefahrenen Position und ihrer aktiven Position schiebend bewegt werden kann, um die Mittel in Form eines Hakens (1) zu überschreiten und unter diesen in der Verriegelungsposition der zwei Teile ineinander einzugreifen.

4. Verriegelungssystem nach einem der vorhergehenden Ansprüche, **dadurch gekennzeichnet, dass** Mittel (14) zur Spannung zwischen den zwei Teilen vorgesehen sind.

5. Verriegelungssystem nach Anspruch 4, **dadurch gekennzeichnet, dass** die Mittel zur Spannung mindestens eine Spannungsscheibe (14) umfassen, die um die Mittel in Form eines Hakens (1) angeordnet ist.

6. Verriegelungssystem nach einem der vorhergehenden Ansprüche, **dadurch gekennzeichnet, dass** die Betätigungsmittel (3) einen pneumatischen Zylinder umfassen.

## Claims

1. System for engaging a dashboard (P) with a chassis (C) of a motor vehicle, wherein one of the components, the dashboard or the chassis, comprises hook-like means (1) which are suitable for being engaged in an opening (L) of the other component, the chassis or the dashboard, and for co-operating with means which form an engagement lock (2) and which can be moved between a retracted assembly/disassembly position for the two components and an active position for engaging the two components under the control of operating means (3.

2. Engagement system according to claim 1, wherein the means which form the lock (2) are carried by a plate (7) which is articulated to the corresponding component and which is connected to the operating means (3) by a first rod (5), a first end of which is associated with the operating means (3) and a second end of which is articulated to the plate (7) in order to move it between retracted and active positions.

3. Engagement system according to claim 1 or 2, wherein the means which form the lock (2) comprise a locking latch (9) which can be moved in a sliding manner in a slide (10) of the plate (7) counter to the urging of resilient means under the action of a second handling rod (11) which is articulated to the corresponding component and to the first rod, when the means which form the lock (2) are moved between the retracted position and the active position thereof, in order to move past the hook-like means (1) and to become engaged thereunder in a position for engaging the two components with each other.

4. Engagement system according to one of the preceding claims, wherein tensioning means (14) are provided between the two components.

5. Engagement system according to claim 4, wherein the tensioning means comprise at least one tension washer (14) which is positioned around the hook-like means (1).

6. Engagement system according to one of the preceding claims, wherein the operating means (3) comprise a pneumatic jack.
